# EUROPEAN PATENT SPECIFICATION

(11) **EP 4 393 964 B1**
(45) Date of publication and mention of the grant of the patent: **30.09.2026**
(21) Application number: 22861248.7
(22) Date of filing: 19.08.2022
(51) Int. Cl.: C08F 8/42, C08F 220/60, C08F 230/08, C08K 5/29, C08K 5/541, C08K 5/544, C08L 33/14, C09D 133/14, C08G 18/24, C08G 18/62, C08G 18/71, C08G 18/79, C09D 175/04, C07F 7/18

(54) **HYDROPHILIC COPOLYMER AND HYDROPHILIC COMPOSITION**
HYDROPHILES COPOLYMER UND HYDROPHILE ZUSAMMENSETZUNG
COPOLYMÈRE HYDROPHILE ET COMPOSITION HYDROPHILE

(30) Priority: 23.08.2021 JP 2021135479
(43) Date of publication of application: 03.07.2024
(73) Proprietor: SHIN-ETSU CHEMICAL CO., LTD., Tokyo 1000005 (JP)
(72) Inventor: TAKAGI, Kazunori, Annaka-shi, Gunma 379-0224 (JP); HIROKAMI, Munenao, Annaka-shi, Gunma 379-0224 (JP)
(74) Representative: Mewburn Ellis LLP
(86) International application number: PCT/JP2022/031288
(87) International publication number: WO 2023/026960

(56) References cited:
- WO-A1-02/061012
- WO-A1-2012/073659
- WO-A1-2018/097012
- JP-A- 2001 354 829
- JP-A- 2002 060 737
- JP-A- 2012 031 247
- JP-A- 2016 501 948
- JP-A- 2018 162 431
- JP-A- 2019 026 825
- JP-A- 2019 123 798
- JP-A- 2019 143 032
- JP-A- 2020 007 553
- JP-A- H 061 680
- JP-A- H10 279 768
- KR-A- 20110 111 771
- US-A- 3 865 619
- US-A- 4 491 650

## Description

### TECHNICAL FIELD

The present invention relates to a hydrophilic polymer and to a hydrophilic composition containing the hydrophilic copolymer. The invention is set out in the appended set of claims.

### BACKGROUND ART

In recent years, there has been a growing desire to ameliorate the fogging of base materials formed of organic materials such as plastic or inorganic materials such as glass.

The fogging of a base material is typically ameliorated by coating a hydrophilic film onto the surface of the base material. For example, Patent Document 1 discloses, as a coating agent capable of imparting hydrophilicity to a base material, a coating composition having added thereto a hydrophilic copolymer having a highly hydrophilic quaternary ammonium salt structure.

However, coating films formed with this coating composition lack sufficient water resistance; when the film comes into contact with water, surface properties such as hydrophilicity and fog resistance sometimes deteriorate. Further improvement has thus been desired. Patent Documents 2 and 3 also disclose resin coatings.

### PRIOR ART DOCUMENTS

### PATENT DOCUMENTS

Patent Document 1: JP-A 2018-162431
Patent Document 2 : US 3865619 A
Patent Document 3 : US 4491650 A

### SUMMARY OF INVENTION

### TECHNICAL PROBLEM

In light of these circumstances, the objects of this invention are to provide a hydrophilic copolymer which gives a coat of excellent hydrophilicity, fog resistance and water resistance, and to provide a hydrophilic composition containing this hydrophilic copolymer.

### SOLUTION TO PROBLEM

The inventors have conducted intensive investigations aimed at achieving the above objects. As a result, they have discovered that specific hydrophilic copolymers have excellent water resistance and give coats which can impart long-lasting hydrophilicity and fog resistance to base materials formed of organic materials such as plastic or inorganic materials such as glass. This discovery ultimately led to the present invention.

Accordingly, the invention provides the following.

A hydrophilic copolymer containing constitutional units (a) of formula (1) below and constitutional units (b) of formula (2) below, wherein the content of constitutional units (a) is from 5 to 60 wt% and the combined content of constitutional units (a) and constitutional units (b) is 30 wt% or more 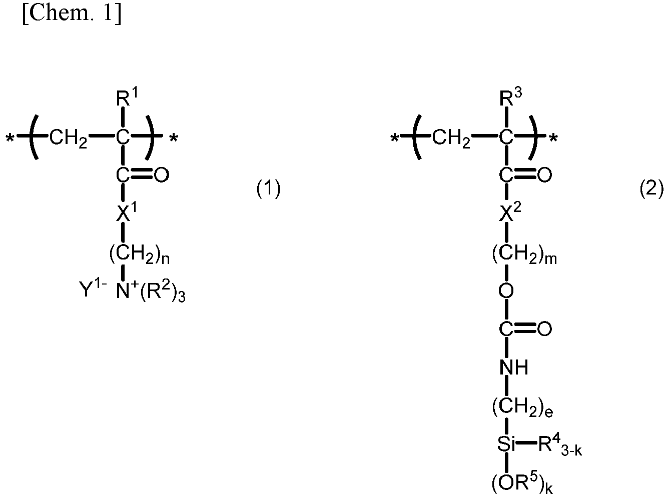 wherein, in formula (1), R¹ is a hydrogen atom or a methyl group, each R² is independently a substituted or unsubstituted alkyl group of 1 to 6 carbon atoms or aryl group of 6 to 18 carbon atoms, X¹ is -NH- or -O-, n is an integer from 1 to 6, and Y¹⁻ is any anion;
in formula (2), R³ is a hydrogen atom or a methyl group, R⁴ and R⁵ are each independently an alkyl group of 1 to 10 carbon atoms or an aryl group of 6 to 10 carbon atoms, X² is -NH- or -O-, m is an integer from 1 to 10, e is an integer from 1 to 10, and k is an integer from 1 to 3; and
an asterisk * denotes a bond to a neighboring constitutional unit.
In some embodiments, the hydrophilic copolymer further contains constitutional units of formula (6) below 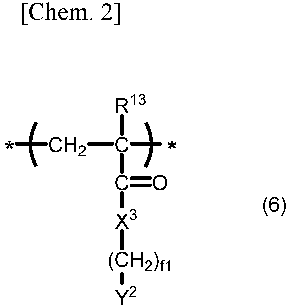 wherein R¹³ is a hydrogen atom or a methyl group; X³ is -NH- or -O-, Y² is a group selected from the group consisting of a hydrogen atom and hydroxyl, carboxyl, amino, isocyanate, epoxy, alkoxy and hydrolyzable silyl groups; f1 is an integer from 0 to 10, with the proviso that when f1 is 0, Y² is a hydrogen atom; and an asterisk * has the same meaning as above.

In some embodiments, the hydrophilic copolymer further contains constitutional units of formula (7) below 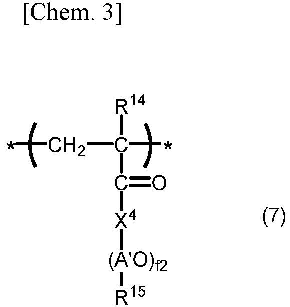 wherein R¹⁴ is a hydrogen atom or a methyl group, X⁴ is -NH- or -O-, A' is an alkylene group of 1 to 6 carbon atoms, R¹⁵ is an alkyl group of 1 to 6 carbon atoms, f2 is an integer from 1 to 10, and an asterisk * has the same meaning as above.

Also provided is a hydrophilic composition containing the hydrophilic copolymer.

In some embodiments, the hydrophilic composition further contains at least one compound selected from the group consisting of polyisocyanate compounds, organosilicon compounds of formula (3) below and organosilicon compounds of formula (4) below 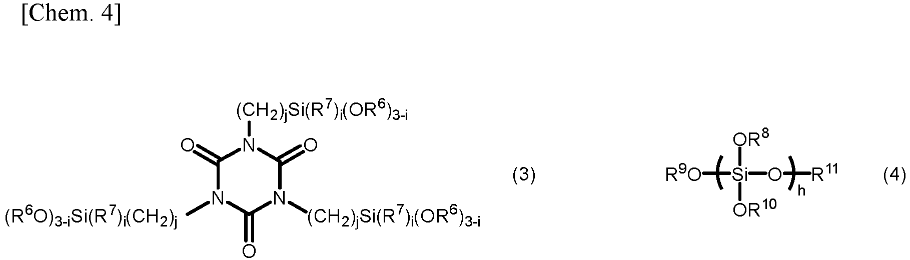 wherein, in formula (3), R⁶ and R⁷ are each independently an alkyl group of 1 to 10 carbon atoms or an aryl group of 6 to 10 carbon atoms, j is an integer from 1 to 10, and i is an integer from 1 to 3; and
in formula (4), R⁸, R⁹, R¹⁰ and R¹¹ are each independently a hydrogen atom or an organic group of 1 to 6 carbon atoms, and h is an integer from 1 to 20.

Also provided is a coating agent containing the hydrophilic

Also provided is a hydrophilic film of the coating agent in the cured state.

### ADVANTAGEOUS EFFECTS OF INVENTION

The hydrophilic copolymer of the invention is able to form a film that has excellent water resistance and can impart long-lasting hydrophilicity and fog resistance to glass and other base materials.

### DESCRIPTION OF EMBODIMENTS

The invention is described more fully below.

### <Hydrophilic Copolymer>

The hydrophilic copolymer according to this invention (also referred to below simply as "the copolymer") includes subsequently described constitutional units (a) and (b) in specific content ratios.

The constitutional units of the hydrophilic copolymer of the invention are each described below.

### [Constitutional Unit (a)]

Constitutional unit (a) included in the hydrophilic copolymer of the invention is represented by formula (1) below.

The ammonium group included in constitutional unit (a) has a high hydrophilicity and a low affinity to organic solvents and so tends to be exposed at the surface of an applied film, enabling a film with hydrophilic constituents immobilized at the surface to be obtained. 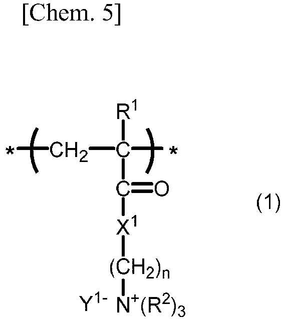 In this formula, an asterisk * has the same meaning as above.

In formula (1), R¹ is a hydrogen atom or a methyl group, and is preferably a hydrogen atom.

Each R² is independently a substituted or unsubstituted alkyl group of 1 to 6 carbon atoms or aryl group of 6 to 18 carbon atoms.

The alkyl group of 1 to 6 carbon atoms of R² may be linear, branched or cyclic. Specific examples include methyl, ethyl, n-propyl, isopropyl, n-butyl, isobutyl, sec-butyl, tert-butyl, n-pentyl, n-hexyl and cyclohexyl groups.

Specific examples of aryl groups of 6 to 18 carbon atoms that may serve as R² include phenyl, biphenyl, naphthyl, anthryl (anthracenyl), phenanthryl, pyrenyl, naphthacenyl, indenyl, azulenyl, fluorenyl and terphenyl groups.

Some or all hydrogen atoms bonded to carbon atoms on these alkyl groups and aryl groups may be substituted with halogen atoms such as chlorine, fluorine and bromine or other substituents such as cyano groups. Specific examples of substituted alkyl and aryl groups include chloromethyl, bromoethyl, trifluoropropyl, chlorophenyl, bromophenyl and cyanoethyl groups.

Of these, from the standpoint of enhancing the surface hydrophilicity of the applied film, R² is preferably an alkyl group of 1 to 3 carbon atoms or a phenyl group, more preferably a methyl group or ethyl group, and even more preferably a methyl group.

X¹ is -NH- or -O-; from the standpoint of enhancing the surface hydrophilicity and the resistance to hydrolysis of the film, -NH- is preferred.

The letter 'n' is an integer from 1 to 6. To enhance the surface hydrophilicity of the film, an integer from 1 to 4 is preferred; an integer from 1 to 3 is more preferred.

Y¹⁻ is any anion. However, from the standpoint of enhancing the surface hydrophilicity of the film, a halogen anion and alkyl sulfate anions (R^{a}-OSO₃⁻) are more preferred.

Specific examples of halogen anions that may serve as Y¹⁻ include F⁻, Cl⁻, Br⁻ and I⁻.

The alkyl sulfate anions (R^{a}-OSO₃⁻) that may serve as Y¹⁻ are monovalent anions in which an alkyl group and a sulfoxide anion are attached to each other. The alkyl group represented by R^{a} is preferably a substituted or unsubstituted alkyl group of 1 to 6 carbon atoms. Specific examples of the alkyl group include the same groups as mentioned about in connection with R².

Specific examples of alkyl sulfate anions include the methyl sulfate anion and the ethyl sulfate anion.

Of these, Cl⁻ and alkyl sulfate anions in which the alkyl group has 1 to 3 carbon atoms are preferred; Cl⁻, the methyl sulfate anion and the ethyl sulfate anion are more preferred; and Cl⁻ is even more preferred.

Anions of formula (5) below may also be advantageously used as Y¹⁻.
[Chem. 6]

R¹²O-(AO)_{g}-SO₃⁻ (5)

In formula (5), R¹² is a substituted or unsubstituted linear or branched alkyl group of 12 to 14 carbon atoms.

Specific examples of the alkyl group of R¹² include dodecyl (n-dodecyl, isododecyl, etc.), tridecyl (n-tridecyl, isotridecyl, etc.) and tetradecyl (n-tetradecyl, isotetradecyl, etc.) groups.

Some or all hydrogen atoms bonded to carbon atoms on these alkyl groups may be substituted with halogen atoms such as chlorine, fluorine and bromine or other substituents such as cyano groups.

Of these, from the standpoint of ready availability, dodecyl and tridecyl groups are preferred, and tridecyl groups are more preferred. To further enhance the advantageous effects of the invention, the alkyl group of 12 to 14 carbon atoms in R¹² is preferably linear. Therefore, in preferred embodiments of the invention, R¹² is a substituted or unsubstituted linear tridecyl group; an unsubstituted linear tridecyl group is more preferred.

The letter 'A' represents a linear or branched alkylene group of 2 to 4 carbon atoms.

Specific examples of the alkylene group serving as A include ethylene, trimethylene, propylene (-CH₂-CH(CH₃)-), tetramethylene, 1-methyltrimethylene (-CH₂-CH₂-CH(CH₃)-), 2-methyltrimethylene (-CH₂-CH(CH₃)-CH₂-), dimethylethylene (-CH₂-C(CH₃)₂-) and ethylethylene (-CH₂-CH(CH₂CH₃)-) groups.

The letter 'g' is the average number of added moles of -(AO)-, this being a number from 2 to 50. From the standpoint of improving the surface hydrophilicity of the film and the workability of the composition due to a decrease in viscosity, this is preferably a number from 2 to 30, more preferably a number from 2 to 20, and even more preferably a number from 2 to 10.

That is, in formula (5), -(AO)_{g}- represents a polyoxyalkylene group. -(AO)_{g}-preferably includes two or more types of oxyalkylene groups, and more preferably includes oxybutylene groups (-C₄H₈O-). By including such groups, the hydrophilicity of the copolymer does not become too high and the affinity to organic solvents is good.

The oxybutylene groups may be branched and may include one or both of -CH(CH₂CH₃)-CH₂-O- and -CH₂-CH₂(CH₂CH₃)-O. Including such groups further improves the affinity to organic solvents and the surface hydrophilicity of the film.

In addition, -(AO)_{g}- preferably includes oxyethylene groups (-C₂H₄O-).

The ratio of oxybutylene groups in -(AO)_{g}- is preferably from 3 to 90 mol%, more preferably from 10 to 80 mol%, even more preferably from 20 to 50 mol%, and still more preferably from 30 to 40 mol%. In cases where the oxybutylene groups have two or more structures, the oxybutylene group ratio represents the sum of the ratios (mol%) of the respective structures.

In cases where -(AO)_{g}- includes two or more types of oxyalkylene groups, the arrangement thereof may be either random or in blocks. To further increase the surface hydrophilicity effect of the film, a block-type arrangement is preferred. In the case of a block-type arrangement, the blocks may be arranged in any sequence. That is, the polyoxyethylene chain and the polyoxybutylene chain may be connected to the sulfonate group in this order or in the opposite order.

Specific examples of the anion represented by formula (5) include, but are not limited to, those of the following formulas:

CH₃(CH₂)₁₁O{(CH₂)₄O}₂{(CH₂)₂O}₅SO₃⁻

CH₃(CH₂)₁₁O{(CH₂)₄O}₃{(CH₂)₂O}₅SO₃⁻

CH₃(CH₂)₁₁O{(CH₂)₄O}₄{(CH₂)₂O}₅SO₃⁻

CH₃(CH₂)₁₁O{(CH₂)₄O}₅{(CH₂)₂O}₅SO₃⁻

CH₃(CH₂)₁₁O{(CH₂)₄O}₁₀{(CH₂)₂O}₁₅SO₃⁻

CH₃(CH₂)₁₁O{(CH₂)₄O}₁₀{(CH₂)₂O}₂₀SO₃⁻

CH₃(CH₂)₁₂O{(CH₂)₄O}₂{(CH₂)₂O}₅SO₃⁻

CH₃(CH₂)₁₂O{(CH₂)₄O}₃{(CH₂)₂O}₅SO₃⁻

CH₃(CH₂)₁₂O{(CH₂)₄O}₄{(CH₂)₂O}₅SO₃⁻

CH₃(CH₂)₁₂O{(CH₂)₄O}₅{(CH₂)₂O}₅SO₃⁻

CH₃(CH₂)₁₂O{(CH₂)₄O}₁₀{(CH₂)₂O}₁₅SO₃⁻

CH₃(CH₂)₁₂O{(CH₂)₄O}₁₀{(CH₂)₂O}₂₀SO₃⁻

Specific examples of constitutional unit (a) represented by above formula (1) include, but are not limited to, those of the following formulas. 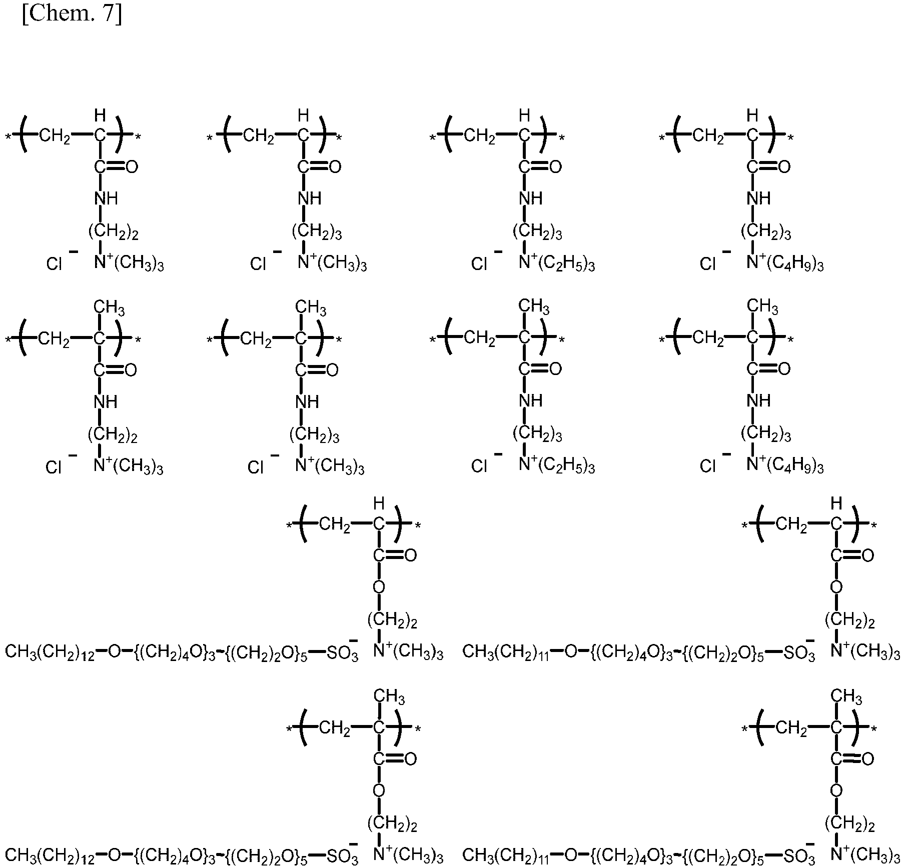 In these formulas, an asterisk* has the same meaning as above.

### [Constitutional Unit (b)]

The constitutional unit (b) included in the hydrophilic copolymer of the invention is represented by formula (2) below.

When a composition containing the hydrophilic copolymer of the invention includes a curing agent, the hydrolyzable silyl groups included in the constitutional units (b) undergo crosslinking reactions with functional groups included in this curing agent. Even when a curing agent is not included, the hydrolyzable silyl groups can crosslink on their own (self-crosslinking). In this way, a crosslinked structure that includes the hydrophilic copolymer forms within the film. 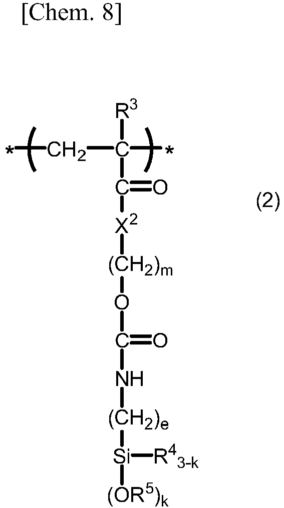 In this formula, an asterisk* has the same meaning as above.

In formula (2), R³ is a hydrogen atom or a methyl group, and is preferably a methyl group.

R⁴ and R⁵ are each independently an alkyl group of 1 to 10 carbon atoms, preferably 1 to 8 carbon atoms, and more preferably 1 to 6 carbon atoms, or an aryl group of 6 to 10 carbon atoms, preferably 6 to 8 carbon atoms.

The alkyl groups of R⁴ and R⁵ may be linear, branched or cyclic. Specific examples include methyl, ethyl, n-propyl, isopropyl, n-butyl, isobutyl, s-butyl, t-butyl, n-pentyl, n-hexyl and cyclohexyl groups.

Specific examples of the aryl groups of R⁴ and R⁵ include phenyl and tolyl groups.

Of these, R⁴ is preferably an alkyl group of 1 to 3 carbon atoms, and more preferably a methyl group, and R⁵ is preferably an alkyl group of 1 to 3 carbon atoms, and more preferably a methyl or ethyl group.

X² is -NH- or -O-, and preferably -O-.

The letter 'm' is an integer from 1 to 10, preferably an integer from 1 to 4, and more preferably an integer from 2 to 4.

The letter 'e' is an integer from 1 to 10, preferably an integer from 1 to 4, and more preferably an integer from 2 to 4.

The letter 'k' is an integer from 1 to 3, and is preferably 3.

Specific examples of constitutional unit (b) represented by above formula (2) include, but are not limited to, those of the following formulas. 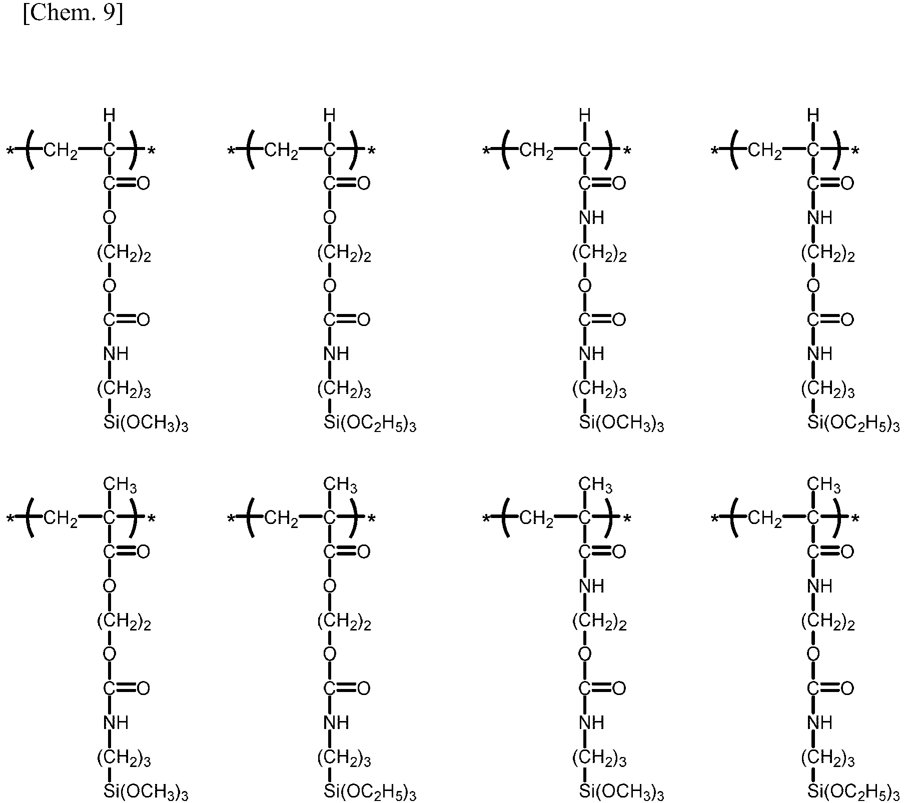 In these formulas, an asterisk * has the same meaning as above.

In the hydrophilic copolymer of the invention, the content of constitutional units (a) is from 5 to 60 wt%, preferably from 10 to 50 wt%, and more preferably from 15 to 40 wt%. At a constitutional unit (a) content of less than 5 wt%, the hydrophilicity of the copolymer is inadequate and, when the copolymer is formed into a film, the surface hydrophilicity of the film decreases. On the other hand, at a constitutional unit (a) content greater than 60 wt%, the hydrophilicity of the copolymer becomes too high; as a result, when the copolymer is formed into a film, the water resistance of the film decreases.

In addition, in the hydrophilic copolymer of the invention, the combined content of constitutional units (a) and constitutional units (b) is 30 wt% or more, preferably 35 wt% or more, and more preferably 40 wt% or more. At a combined content of constitutional units (a) and constitutional units (b) below 30 wt%, the hydrophilicity factor contribution by the constitutional units (a) becomes small and, when the hydrophilic copolymer is formed into a film, the surface hydrophilicity of the film decreases. There is no upper limit to this combined content and the hydrophilic copolymer may even consist solely of constitutional units (a) and constitutional units (b), although the combined content thereof is preferably 80 wt% or less, more preferably 70 wt% or less, and even more preferably 65 wt% or less.

### [Constitutional Unit (c)]

The hydrophilic copolymer of the invention may also include, in addition to above constitutional units (a) and (b), constitutional units (c) of formula (6) below. By including these constitutional units (c), the water resistance of the hydrophilic film increases further. 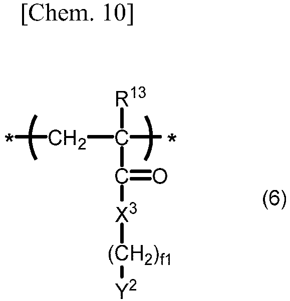 In the formula, an asterisk * has the same meaning as above.

In formula (6), R¹³ is a hydrogen atom or a methyl group, with a methyl group being preferred.

X³ is -NH- or -O-, and is preferably -O-.

Y² is a group selected from the group consisting of a hydrogen atom and hydroxyl, carboxyl, amino, isocyanate, epoxy, alkoxy (-OR) and hydrolyzable silyl groups.

The alkoxy group (-OR) which may serve as Y² is one in which R is a substituted and unsubstituted alkyl group of from 1 to 6 carbon atoms. Specific examples of the alkoxy group include methoxy, ethoxy, n-propoxy, i-propoxy, n-butoxy, sec-butoxy, t-butoxy, n-pentyloxy, n-hexyloxy, cyclopentyloxy and cyclohexyloxy groups. Some or all of the hydrogen atoms bonded to carbon atoms on the alkyl group R may be substituted with halogen atoms such as chlorine, fluorine and bromine or other substituents such as cyano groups.

Examples of the hydrolyzable silyl group which may serve as Y² include alkoxysilyl groups such as trimethoxysilyl, triethoxysilyl, dimethoxysilyl, diethoxysilyl, monomethoxysilyl and monoethoxysilyl groups; carboxylatesilyl groups such as the acetoxysilyl group, halosilyl groups such as trichlorosilyl, dichlorosilyl and monochlorosilyl groups; aminosilyl groups; oximesilyl groups; and hydrosilyl groups.

Of these, Y² is preferably a hydrogen atom or a hydroxyl group.

The subscript f1 is an integer from 0 to 10, preferably an integer from 0 to 6, more preferably an integer from 1 to 4 and even more preferably an integer from 2 to 4, with the proviso that when f1 is 0, Y² is a hydrogen atom.

In cases where the hydrophilic copolymer of the invention includes constitutional units (c), by using together, for example, the copolymer of the invention and a curing agent having a functional group capable of a crosslinking reaction with Y² on the constitutional units (c), a crosslinked structure can be formed with the curing agent and the copolymer. Alternatively, by using together, for example, the copolymer of the invention and a curing catalyst such as an acid catalyst, it is also possible for the copolymer to undergo a crosslinking reaction on its own (self-crosslinking). A film formed from a composition containing the hydrophilic copolymer of the invention and a curing agent thus has a crosslinked structure and can exhibit excellent water resistance.

In light of the above, Y² in formula (6) is more preferably a hydroxyl group. In cases where the copolymer of the invention includes constitutional units (c) in which Y² is a hydroxyl group, by combining, for example, the copolymer of the invention and a curing agent having an isocyanate group, a crosslinked structure can be formed even under low-temperature conditions (e.g., 110°C or below). Hence, a film of the composition according to the invention can be formed even on base materials having a low heat resistance.

Specific examples of the constitutional units (c) represented by above formula (6) include, but are not limited to, those of the following formulas. 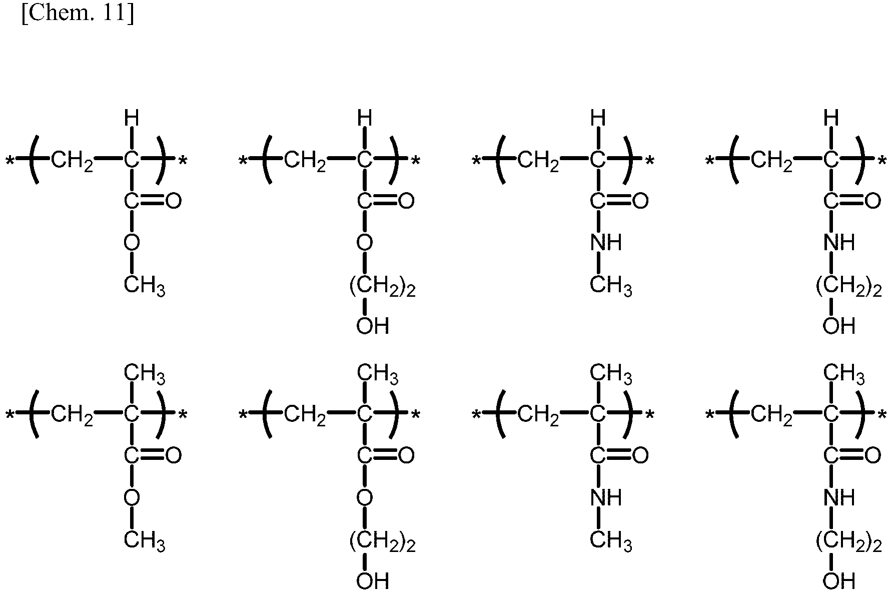 In these formulas, an asterisk * has the same meaning as above.

In cases where the hydrophilic copolymer of the invention includes constitutional units (c), the content thereof, although not particularly limited, is preferably from 5 to 70 wt%, more preferably from 10 to 60 wt%, and even more preferably from 20 to 50 wt%.

### [Other Constitutional Units]

In addition to the above-described constitutional units, the hydrophilic copolymer of the invention may include, for example, constitutional units of formula (7) below, provided that doing so does not compromise the objects of the invention. 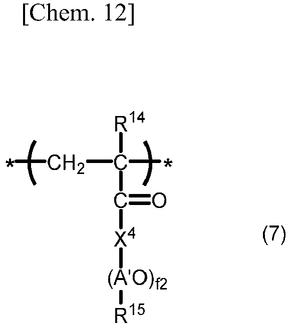 In this formula, an asterisk * has the same meaning as above.

In formula (7), R¹⁴ is a hydrogen atom or a methyl group; a methyl group is preferred.

X⁴ is -NH- or -O-, and is preferably -O-.

A' is an alkylene group of 1 to 6 carbon atoms. Specific examples include methylene, ethylene, trimethylene, tetramethylene, pentamethylene and hexamethylene groups.

Of these, alkylene groups of 1 to 3 carbon atoms are preferred; an ethylene group is more preferred.

R¹⁵ is an alkyl group of 1 to 6 carbon atoms. Specific examples include the same as those groups mentioned above in connection with R²; of these, a methyl group is preferred.

The subscript f2 is an integer from 1 to 10, preferably an integer from 2 to 8, and more preferably an integer from 3 to 6.

In cases where the copolymer of the invention includes other constitutional units, the total content thereof is preferably 70 wt% or less, more preferably 60 wt% or less, and more preferably from 5 to 50 wt%.

The various constitutional units included in the hydrophilic copolymer of the invention may be arranged in any order. The inventive copolymer may be an alternating copolymer, a random copolymer or a block copolymer.

### [Physical Properties of Hydrophilic Copolymer]

From the standpoint of increasing the affinity to organic solvents and the hardness of the applied film, the hydrophilic copolymer of the invention has a weight-average molecular weight that is preferably from 1,000 to 50,000, more preferably from 5,000 to 40,000, even more preferably from 10,000 to 30,000, and still more preferably from 15,000 to 20,000. In this invention, the weight-average molecular weight is a value determined by gel permeation chromatography (GPC) using polyethylene glycol/polyethylene oxide as the reference material.

In terms of the compatibility with organic solvents and the workability, the hydrophilic copolymer of the invention has a viscosity that is preferably from 0.01 to 0.5 Pa·s (temperature, 25°C). In this invention, the viscosity is a value measured with a rotational viscometer.

The hydrophilic copolymer of the invention has a glass transition temperature which is preferably from -10°C to 50°C. In this invention, the glass transition temperature is a value measured in accordance with JIS K7121.

### <Method for Producing Hydrophilic Copolymer>

The hydrophilic copolymer of the invention can be obtained by, for example, as shown in the reaction scheme below, reacting a copolymer containing constitutional units represented by above formula (1) and constitutional units in which Y² in above formula (6) is a hydroxyl group with an organosilicon compound of formula (8) below in an open-air atmosphere or in a nitrogen or other inert gas atmosphere.

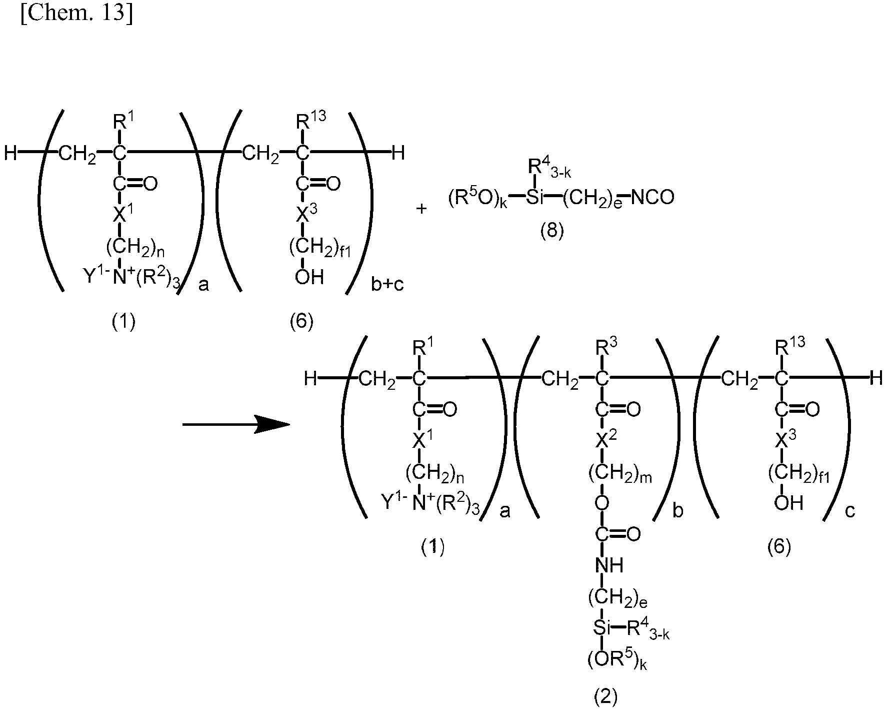

In these formulas, R¹, R², R³, R⁴, R⁵, R¹³, X¹, X², X³, Y¹, e, f1, k, m and n are as defined above, and a, b and c are values such that the contents of the respective constitutional units fall within the above-indicated ranges.

A commercial product that is available on the market may be used as the polymer containing constitutional units represented by above formula (1) and constitutional units in which Y² in above formula (6) is a hydroxyl group. One example of such a product is Acrit 1WX from Taisei Fine Chemical Co., Ltd.

Specific examples of the compound of above formula (8) include, but are not limited to, those shown below. Of these, the compound of formula (9) is preferred. 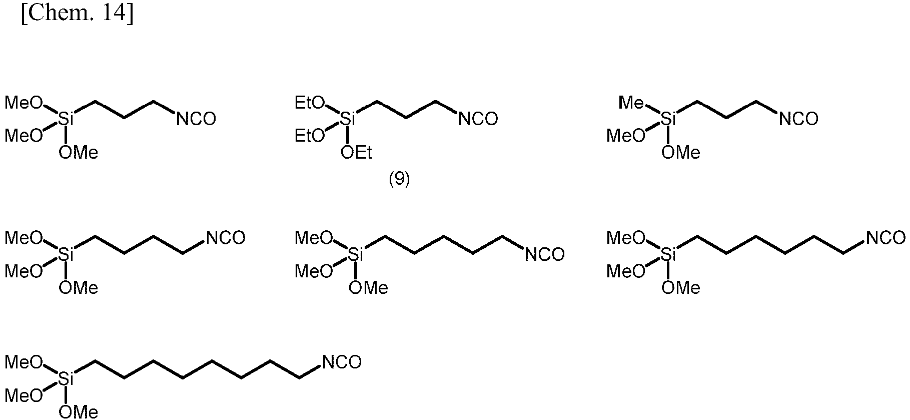 In these formulas, Me stands for a methyl group and Et stands for an ethyl group.

The reaction may be carried out in the absence of a solvent or, if necessary, may be carried out in an organic solvent such as methyl ethyl ketone or acetone, provided that this does not hinder the reaction.

The reaction temperature is preferably between 0°C and the boiling point of the solvent, and more preferably between 0°C and 50°C. The reaction time is preferably from 1 to 150 hours, and more preferably from 5 to 100 hours.

At the time of the reaction, the copolymer containing constitutional units of formula (1) and constitutional units for which Y2 in formula (6) is a hydroxyl group and the organosilicon compound of formula (8) are used in a ratio of from 0.8 to 1.2 moles of the organosilicon compound (8) per mole of hydroxyl groups in the copolymer.

If necessary, the solids concentration of the hydrophilic copolymer obtained by the above method may be adjusted or solvent exchange or filtration treatment of the copolymer may be carried out, following which additives may be added thereto. Alternatively, the hydrophilic copolymer prepared by polymerization may be purified by precipitation, re-precipitation and the like using, for example, hexane and may be dissolved, together with additives, in a solvent suitable for the intended use.

### <Hydrophilic Composition>

The hydrophilic composition of the invention (also referred to below simply as "the composition") includes one or more of the above-described hydrophilic copolymers. The content of the hydrophilic copolymer included in the inventive composition is not particularly limited. However, from the standpoint of the hydrophilicity of the composition, the content is preferably from 1 to 20 wt%, and more preferably from 5 to 15 wt%, of the overall composition.

Where necessary, the hydrophilic composition of the invention may include other ingredients within ranges that do not compromise the objects of the invention. The ingredients of the composition are described below.

### [Curing Agent]

The composition of the invention preferably further includes a curing agent. The curing agent promotes crosslinking reactions by the hydrophilic copolymer and contributes to formation of a crosslinked structure within the applied coat. The curing agent may or may not be incorporated into the crosslinked structure at this time.

In the case of a curing agent incorporated into the crosslinked structure, it preferably has a functional group or structure which undergoes a crosslinking reaction with functional groups included on side chains of the hydrophilic copolymer (specifically, hydrolyzable silyl groups included in constitutional unit (b) or functional groups Y² included in constitutional unit (c)). Crosslinking at this time may take place via covalent bonds, ionic bonds, hydrogen bonds or coordinate bonds, although covalent bonds are preferred.

The curing agent incorporated into the crosslinked structure is preferably one having on the molecule a functional group such as a hydrolyzable silyl group, isocyanate group, epoxy group, carbodiimide group, oxazolyl group, epoxy group, hydroxyl group, carboxyl group or amino group, a molecular structure such as a siloxane or melamine structure, or a metal ion.

Examples of preferred combinations of the crosslinkable functional groups on side chains of the hydrophilic copolymer and the functional group or structure of the curing agent are shown in Table 1.

**[Table 1]**

| Functional groups on hydrophilic copolymer side chains | Functional group or structure of curing agent |
|---|---|
| hydrolyzable silyl group | hydrolyzable silyl group, siloxane structure |
| hydroxyl group | isocyanate group, melamine structure |
| carboxyl group | epoxy group, carbodiimide group, oxazoline group, metal ion |
| amino group | epoxy group |
| isocyanate group | hydroxyl group |
| epoxy group | carboxyl group, amino group |

Curing agents having a hydrolyzable silyl group are exemplified by compounds having a hydrolyzable silyl group or a siloxane structure that includes a hydrolyzable silyl group. Specific examples include compounds of formula (3) below, compounds of formula (4) below, and hydrolyzable condensates of compounds of formula (4) below.

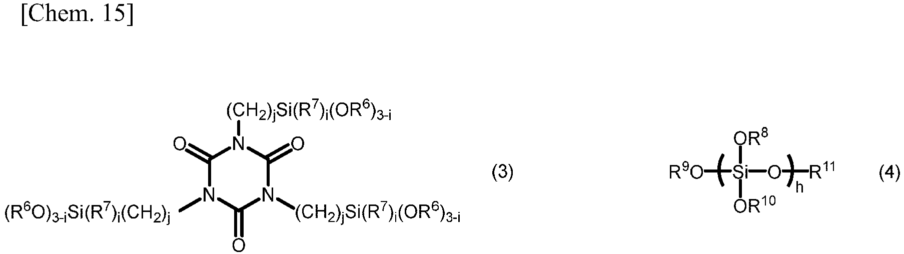

In formula (3), R⁶ and R⁷ are each independently an alkyl group of 1 to 10 carbon atoms, preferably 1 to 8 carbon atoms, and more preferably 1 to 6 carbon atoms, or an aryl group of 6 to 10 carbon atoms, preferably 6 to 8 carbon atoms.

The alkyl groups of R⁶ and R⁷ may be linear, branched or cyclic. Specific examples include methyl, ethyl, n-propyl, isopropyl, n-butyl, isobutyl, s-butyl, t-butyl, n-pentyl, n-hexyl and cyclohexyl groups.

Specific examples of the aryl groups of R⁶ and R⁷ include phenyl and tolyl groups.

Of these, R⁶ is preferably an alkyl group of 1 to 3 carbon atoms, and more preferably a methyl or ethyl group, and R⁷ is preferably an alkyl group of 1 to 3 carbon atoms, and more preferably a methyl group.

In formula (3), the letter 'j' is an integer from 1 to 10, preferably an integer from 1 to 6, more preferably an integer from 1 to 4, and even more preferably an integer from 2 to 4.

The letter 'i' is an integer from 1 to 3, and is preferably 3.

Specific examples of the compounds of formula (3) above include, but are not limited to, N,N,N-tris(trimethoxysilylpropyl)isocyanurate and N,N,N-tris(triethoxysilylpropyl)isocyanurate.

In formula (4), R⁸, R⁹, R¹⁰ and R¹¹ are each independently a hydrogen atom or a monovalent organic group of 1 to 6 carbon atoms.

In formula (4), the monovalent organic groups of 1 to 6 carbon atoms represented by R⁸, R⁹, R¹⁰ and R¹¹ may be linear, branched or cyclic, and are exemplified by alkyl groups of 1 to 6 carbon atoms and alkenyl groups of 2 to 6 carbon atoms.

Specific examples of alkyl groups of 1 to 6 carbon atoms include methyl, ethyl, propyl, isopropyl, n-butyl, tert-butyl, n-pentyl, n-hexyl and cyclohexyl groups.

Specific examples of alkenyl groups of 2 to 6 carbon atoms include vinyl and allyl groups.

From the standpoint of hydrolyzability, the monovalent organic groups of 1 to 6 carbon atoms represented by R⁸, R⁹, R¹⁰ and R¹¹ in formula (4) are preferably alkyl groups of 1 to 4 carbon atoms, and more preferably methyl groups or ethyl groups.

In formula (4), h is an integer from 1 to 20, preferably an integer from 3 to 12, and more preferably an integer from 5 to 12. By having h be 20 or less, the viscosity when rendered into a coating liquid does not become too high, enabling a highly uniform fog-resistant film to be formed. By having h be 1 or more, the reactivity of the compound represented by formula (5) is easily controlled, enabling a fog-resistant film of excellent hydrophilicity to be formed.

In this invention, "condensates of compounds of formula (4)" refers to compounds having a structure where a siloxane bond (Si-O-Si) has formed on at least one of the moieties Si-OR⁸, Si-OR⁹, Si-OR¹⁰ and Si-OR¹¹ in a compound of formula (4). Condensates of compounds of formula (4) can be formed by, for example, the mutual condensation or hydrolytic condensation of two or more molecules of a compound of formula (4). Hydrolytic condensation is described below using by way of illustration a case in which R¹¹ in formula (4) is a methyl group (-CH₃). In one example of hydrolytic condensation, Si-OH forms via the hydrolysis of Si-OCH₃, following which Si-O-Si forms via the dehydrative condensation of Si-OH.

The structure of the condensate of the compound represented by formula (4) is not particularly limited, and is exemplified by random, linear, ladder and cage structures.

In the compound of formula (4) and hydrolytic condensates thereof, when hydrogen atoms are included in R⁸, R⁹, R¹⁰ and R¹¹, these hydrogen atoms may be hydrogen atoms included in the compound added as a starting material during production of the compound of formula (4) or may be hydrogen atoms introduced by hydrolysis. That is, when at least one of R⁸, R⁹, R¹⁰ and R¹¹ in formula (4) is a hydrogen atom, at least one Si-OH group in formula (4) may be a Si-OH group included in the compound added as a starting material during production of the compound of formula (4) or may be a Si-OH group formed by hydrolysis.

The compound of formula (4) may be a commercial product. The compound of formula (4) is available as MKC^{®} Silicate (e.g., MS51, MS56) from Mitsubishi Chemical Corporation.

The compound of formula (4) has a weight-average molecular weight (Mw) of preferably from 300 to 1,500, and more preferably from 500 to 1,200. The weight-average molecular weight is a value determined by gel permeation chromatography (GPC) using polyethylene glycol/polyethylene oxide as the reference material.

Curing agents having an isocyanate group are exemplified by aliphatic, alicyclic and aromatic polyisocyanates.

Specific examples include isophorone diisocyanate, hexamethylene diisocyanate, xylylene diisocyanate, tolylene diisocyanate, polymeric MDI, naphthalene diisocyanate, tetramethylxylylene diisocyanate, trimethylhexamethylene diisocyanate, lysine diisocyanate methyl ester, hydrogenated xylylene diisocyanate, diphenylmethane diisocyanate, methylene bis(4,1-cyclohexylene) diisocyanate, 1,3-bis(isocyanatomethyl)cyclohexane, and isocyanate derivatives such as adducts of a diisocyanate compound and a polyol compound such as trimethylolpropane, and biurets and isocyanurates of diisocyanate compounds.

Of these, to suppress yellowing of the applied film, a polyisocyanate derived from hexamethylene diisocyanate is preferred.

Curing agents having an isocyanate group are available as commercial products. Examples of commercial products that may be used include Duranate^{®} TPA-100, TKA-100, 24A-100, 22A-75P and P301-75E from Asahi Kasei Corporation; Coronate^{®} HX, HK and 2715 from Tosoh Corporation; and Takenate^{®} 500 and 600 from Mitsui Chemicals, Inc.

One of these may be used alone or two or more may be used together.

Curing agents having a melamine structure are preferably melamine resins. Specific examples include condensation products of a melamine such as guanamine, melamine, N-butylmelamine, N-phenylmelamine, N,N-diphenylmelamine, N,N-diallylmelamine, N,N',N"-triphenylmelamine, N,N',N"-trimethylolmelamine, benzoguanamine, 2,4-diamino-6-methyl-sym-triazine, 2,4-diamino-6-butyl-sym-triazine, 2,4-diamino-6-benzyloxy-sym-triazine, 2,4-diamino-6-butoxy-sym-triazine, 2,4-diamino-6-cyclohexyl-sym-triazine, 2,4-diamino-6-chloro-sym-triazine, 2,4-diamino-6-mercapto-sym-triazine or ammeline (N,N,N',N'-tetracyanoethylbenzoguanamine) with formaldehyde and an alcohol (e.g., methanol).

Curing agents having a melamine structure are available as commercial products. Examples of commercial products that may be used include U-VAN^{®} 20SE and 225 from Mitsui Chemicals, Inc.; and Amidir^{®} L-117-60, L-109-65, 47-508-60, L-118-60, G821-60 and J820-60 from DIC Corporation.

One of these may be used alone or two or more may be used together.

Curing agents having an epoxy group are exemplified by aliphatic, alicyclic and aromatic diepoxy compounds and triepoxy compounds.

Specific examples include 2,2-bis(4-hydroxyphenyl)propane diglycidyl ether (bisphenol A diglycidyl ether), ethylene glycol diglycidyl ether, triglycidyl isocyanurate, bisphenol A epoxy resins, bisphenol F epoxy resins, naphthalene epoxy resins, biphenyl epoxy resins, phenolic novolac epoxy resins, 1,5-hexadiene diepoxide, 1,4-pentadiene diepoxide, 1,2:6,7-diepoxyheptane, 1,2:8,9-diepoxynonane, 2,2'-(1,6-hexanediyl)bisoxirane, 1,2:7,8-diepoxyoctane, 1,5-diepoxycyclohexane, 1,2:3,4-diepoxycyclohexane, 1,2:5,6-diepoxycyclooctane, limonene dioxide, cis-1,2:4,5-diepoxy-p-menthane, 1,6-diepoxynaphthalene and triepoxydecane.

One of these may be used alone or two or more may be used together.

Curing agents having an amino group are exemplified by aliphatic, alicyclic and aromatic diamines, triamines and tetramines containing primary amines or secondary amines.

Specific examples include hexamethylenediamine, heptamethylenediamine, octamethylenediamine, nonamethylenediamine, 2-methyl-1,5-diaminopentane, 3,3-dimethylbutane-1,2-diamine, 4-methylpentane-1,2-diamine, 2,2,4,4-tetramethylcyclobutane, 2-methylcyclohexane-1,3-diamine, 2,4-diaminotoluene, 2,5-diaminotoluene, 2,6-diaminotoluene, 3,4-diaminotoluene, 2,3-diaminotoluene, 2,5-dimethylbenzene-1,2-diamine, 3,4-dimethylbenzene-1,2-diamine, 2,6-dimethybenzene-1,4-diamine, 2,4-dimethylbenzene-1,3-diamine, 3,5-dimethyl-1,2-benzenediamine, 4-ethylbenzene-1,3-diamine, 2,5-dimethylbenzene-1,4-diamine, 4-methoxybenzene-1,3-diamine, 4-(1,1-dimethylethyl)-1,2-benzenediamine, p-phenylenediamine, o-phenylenediamine, N-isopropyl-1,3-propanediamine, N-hexylethylenediamine, 5-isopropylaminoamylamine, n-butylethylenediamine, N-tert-butylbutane-1,4-diamine, N-ethylhexane-1,6-diamine, n-isobutylethane-1,2-diamine, N-cyclohexyl-1,2-ethanediamine, N-1-methylcyclohexane-1,4-diamine, N-methylbenzene-1,2-diamine, N-phenylethylenediamine, n-ethylbenzene-1,2-diamine, N-1-methylbenzene-1,3-diamine, 4-amino-N-methylaniline, 2-aminodiphenylamine, 4-aminodiphenylamine, N-1,4-dimethylbenzene-1,2-diamine, N-1,5-dimethylbenzene-1,2-diamine, N-isopropylbenzene-1,2-diamine, N-(3-aminophenyl)-N-phenylamine, N,N'-dimethyltrimethylenediamine, N,N'-diethylbutylenediamine, N,N'-diisopropyl-2,3-butanediamine, N,N'-diethyl-2-butene-1,4-diamine, N,N'-diisopropylethylenediamine, N-propyl-N'-isopropylethylenediamine, N,N'-dimethylbutane-1,4-diamine, N,N'-diethyl-1,3-propanediamine, N,N'-diethylethylenediamine, (1R,2R)-1-N,2-N-dimethylcyclohexane-1,2-diamine, N,N'-dimethyl-1,2-cyclohexanediamine, 1-N,4-N-dimethylcyclohexane-1,4-diamine, 1,4-benzenediamine, 1,2,4-triaminobenzene, 2,4,5-triaminotoluene, 2,4,6-triaminotoluene, 2,3,4-triaminotoluene, 3,5,6-triaminotoluene, 3-N-methylbenzene-1,2,3-triamine, 2-N-methylbenzene-1,2,3-triamine, 4-N-methylbenzene-1,2,4-triamine, 1-N-methylbenzene-1,2,4-triamine, 3-N-methylbenzene-1,3,5-triamine, 1-N',1-N"-diethylpropane-1,1,1-triamine, 4-(3,4-diaminophenyl)benzene-1,2-diamine, 1-N,1-N,2-N,2-N,3-N,3-N,4-N,4-N-octamethylbutane-1,2,3,4-tetraamine and 4-[3-amino-4-(methylamino)phenyl]benzene-1,2-diamine.

One of these may be used alone or two or more may be used together.

Examples of curing agents having a carbodiimide group include dicyclohexylcarbodiimide, diisopropylcarbodiimide, dimethylcarbodiimide, diisobutylcarbodiimide, dioctylcarbodiimide, t-butylisopropylcarbodiimide, diphenylcarbodiimide, di-t-butylcarbodiimide, di-β-naphthylcarbodiimide and N-isopropyl-N'-[2-(methacryloyloxy)ethyl]carbodiimide.

One of these may be used alone or two or more may be used together.

Examples of curing agents having an oxazoline group include 2,2'-bis(2-oxazoline), 2,2'-isopropylidenebis(4-phenyl-2-oxazoline), 1,3-bis(4,5-dihydro-2-oxazolyl)benzene and 1,4-bis(4,5-dihydro-2-oxazolyl)benzene.

One of these may be used alone or two or more may be used together.

Curing agents having a metal ion are exemplified by organoaluminum compounds such as aluminum ethylacetoacetate diisopropylate.

Of these, from the standpoint of the ease of handling, a curing agent having an isocyanate group or a melamine structure is preferred, combining a hydrophilic copolymer containing constitutional units (c) in which Y² is a hydroxyl group with a curing agent having an isocyanate group or a melamine structure is more preferred, and combining a hydrophilic copolymer containing constitutional groups (c) in which Y² is a hydroxyl group with a polyisocyanate or a melamine resin is even more preferred.

That is, a preferred embodiment of the invention is a hydrophilic composition containing the hydrophilic copolymer of the invention and, as the above curing agent, a polyisocyanate or a melamine resin. Of these, in cases where a hydrophilic copolymer containing constitutional units (c) in which Y² is hydroxyl group and a curing agent having isocyanate groups (a polyisocyanate) are combined, the crosslinking reactions proceed under low-temperature conditions (e.g., 110°C or below), making it possible to form a coat of the inventive composition even on base materials having a low heat resistance, which is especially preferred.

Curing agents not incorporated into the crosslinked structure (curing catalysts) are exemplified by inorganic acids, organic acids, organometallic salts and Lewis acids.

Examples of inorganic acids include hydrochloric acid, sulfuric acid, nitric acid, phosphoric acid, nitrous acid, perchloric acid and sulfamic acid,

Examples of organic acids include formic acid, acetic acid, propionic acid, butyric acid, oxalic acid, succinic acid, maleic acid, lactic acid, p-toluenesulfonic acid and citric acid.

Examples of organometallic salts include sodium acetate, potassium acetate, sodium propionate, potassium propionate, sodium formate, potassium formate and tin octanoate.

Examples of Lewis acids include tetraisopropyl titanate, tetrabutyl titanate, aluminum triisobutoxide, aluminum triisopropoxide, aluminum acetylacetonate, tin chloride (SnCl₄), titanium chloride (TiCl₄) and zinc chloride (ZnCl₄).

In addition, alkyltin ester compounds such as dibutyltin diacetate, dibutyltin dilaurate dioctyltin dilaurate, dibutyltin dioctoate, dioctyltin dioctoate and dioctyltin diversatate may also be suitably used.

One of these may be used alone or two or more may be used together.

Curing agents that are incorporated into the crosslinked structure and curing agents that are not incorporated into the crosslinked structure (curing catalysts) may be suitably combined and used together.

When a curing agent is included in the hydrophilic composition of the invention, the content thereof per 100 parts by weight of the hydrophilic copolymer is preferably from 0.05 to 50 parts by weight, and more preferably from 0.1 to 10 parts by weight.

### [Hydrophilic Organosilicon Compound]

The hydrophilic composition of the invention preferably includes also a hydrophilic organosilicon compound of formula (10) below and/or a hydrolytic condensate thereof.

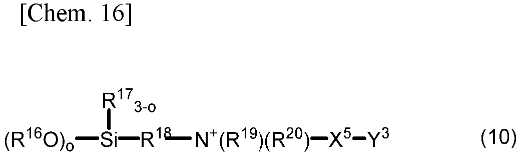

In formula (10), R¹⁶ and R¹⁷ are each independently an alkyl group of 1 to 10 carbon atoms, preferably 1 to 8 carbon atoms, and more preferably 1 to 6 carbon atoms, or an aryl group of 6 to 10 carbon atoms, preferably 6 to 8 carbon atoms. Specific examples of these alkyl groups and aryl groups include the same groups as mentioned above in connection with R⁴ and R⁵*.* Of these, methyl groups are preferred.

R¹⁸ is a divalent organic group that includes an aromatic ring of 6 to 14 carbon atoms, preferably 6 to 10 carbon atoms, preferably a divalent organic group containing an aromatic hydrocarbon ring, more preferably a divalent organic group containing a benzene ring or naphthalene ring, and even more preferably an arylene group or aralkylene group containing a benzene ring or a naphthalene ring.

Specific examples of the arylene group of R¹⁸ include 1,2-phenylene, 1,3-phenylene, 1,4-phenylene and naphthylene groups.

Specific examples of the aralkylene group of R¹⁸ include methylenephenylene, ethylenephenylene, methylenephenylenemethylene and ethylenephenyleneethylene groups.

Of these, R¹⁸ is preferably a phenylene group, and more preferably a 1,4-phenylene group.

R¹⁹ and R²⁰ are each independently an alkyl group of 1 to 6 carbon atoms. Specific examples include the same groups as mentioned above in connection with R⁴ and R⁵ which have 1 to 6 carbon atoms. Of these, methyl groups are preferred.

X⁵ is an alkylene group of 1 to 10 carbon atoms, preferably 1 to 8 carbon atoms, and more preferably 1 to 6 carbon atoms.

The alkylene group of X⁵ may be linear, branched or cyclic. Specific examples include methylene, ethylene, trimethylene, propylene, tetramethylene, pentamethylene, hexamethylene and cyclohexylene groups.

Of these, X⁵ is preferably a methylene, ethylene or trimethylene group, and more preferably a trimethylene group.

Y³ represents COO⁻, SO₃⁻ or PO₄⁻. In terms of the durability of the film that is obtained, SO₃⁻ is preferred.

The letter 'o' is an integer from 1 to 3, although 3 is preferred.

Specific, nonlimiting, examples of such hydrophilic organosilicon compounds are shown below. Of these, the compound of formula (11) is preferred. 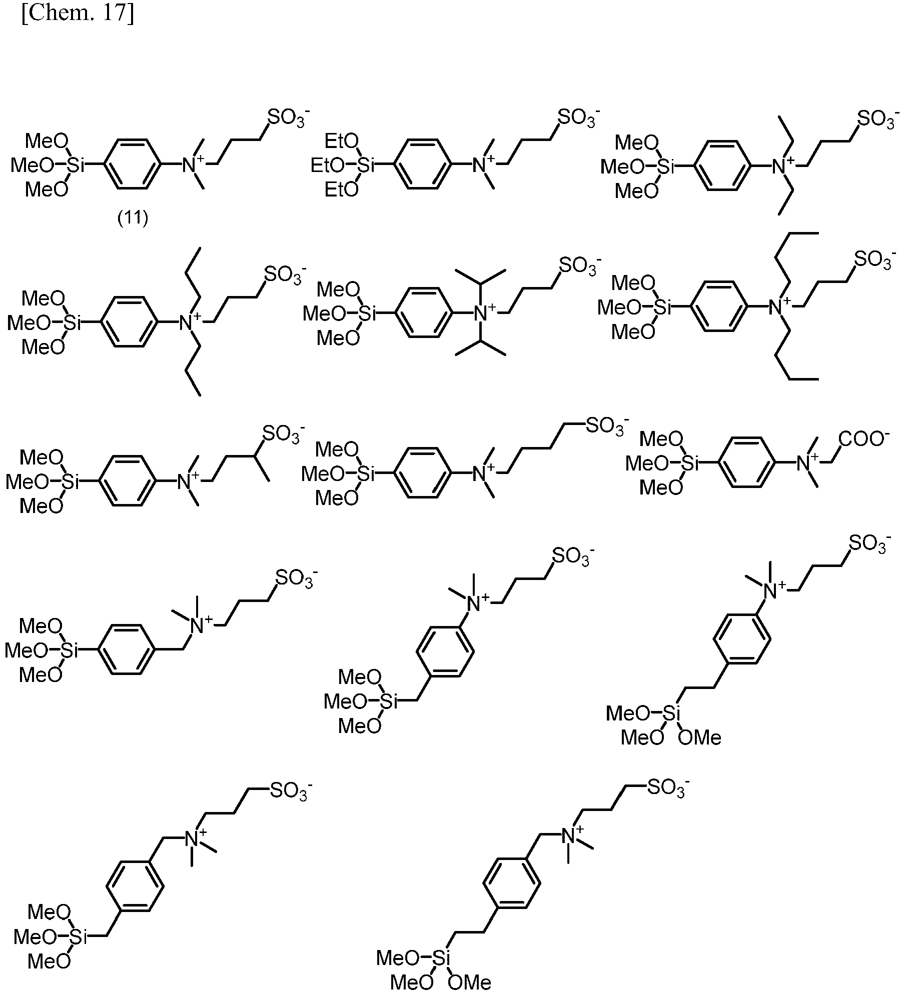 In these formulas, Me stands for a methyl group and Et stands for an ethyl group.

In cases where the hydrophilic composition of the invention includes a hydrophilic organosilicon compound, the content of the hydrophilic organosilicon compound is preferably from 0.01 to 10 parts by weight, and more preferably from 0.1 to 1 part by weight, per 100 parts by weight of the hydrophilic copolymer.

### [Solvent]

The hydrophilic composition of the invention may optionally include a solvent. The solvent is not particularly limited, provided that it can dissolve or disperse the hydrophilic copolymer and also, when included in the composition, curing agents, hydrophilic organosilicon compounds and other additives, does not react with the various ingredients, and can be easily removed in the subsequently described drying step.

Specific examples of the solvent include methanol, ethanol, isopropanol, tetrahydrofuran, cyclohexanone, methyl ethyl ketone, ethylene glycol monomethyl ether, ethylene glycol monoethyl ether, 2-methoxyethyl acetate, diethylene glycol dimethyl ether, 1-methoxy-2-propanol, 1-methoxy-2-propyl acetate, N,N-dimethylformamide, N,N-dimethylacetamide, toluene, ethyl acetate, ethyl lactate, methyl lactate, dimethyl sulfoxide and water.

For example, when polyisocyanate is used as the curing agent, it is preferable to use a solvent which does not react with the isocyanate groups (e.g., a ketone solvent such as methyl ethyl ketone or methyl isobutyl ketone).

One of these may be used alone or two or more may be used together.

### [Additives]

Where necessary, the hydrophilic composition of the invention may additionally include additives such as pigments, film-forming aids, fillers, toners, wetting agents, antistatic agents, pigment dispersants, plasticizers, antioxidants, flow controllers, viscosity modifiers, antifoaming agents, ultraviolet absorbers and dispersants.

The composition has a solids concentration which, from the standpoint of coatability and workability, is preferably from 5 to 80 wt%, and more preferably from 10 to 30 wt%.

The composition has a viscosity which, from the standpoint of coatability and workability, is preferably from 0.01 to 0.05 Pa·s (temperature, 25°C).

The inventive composition may be a one-part liquid system, or may be a system that uses two or more liquids which are mixed prior to use.

The inventive composition is suitable for various types of base materials and can impart hydrophilicity to these.

Specific examples of materials making up the base material include glass; synthetic resins (polymethyl methacrylate resins, polyethylene terephthalate resins, polybutylene terephthalate resins, polyethylene naphthalate resins, ABS resins, polycarbonate resins, polystyrene resins, epoxy resins, unsaturated polyester resins, melamine resins, diallyl phthalate resins, polyimide resins, urethane resins, nylon resins, polyethylene resins, polypropylene resins, polyvinyl chloride resins, fluoroplastics (polytetrafluoroethylene resins, polychlorotrifluoroethylene resins, polyvinylidene fluoride resins, perfluoroalkoxy fluoroplastics, tetrafluoroethylene-hexafluoropropylene copolymer resins, ethylene-tetrafluoroethylene copolymer resins, ethylene/chlorotrifluoroethylene copolymer resins, etc.), polybutadiene, polyisopropylene, SBR, nitrile rubber, EPM, EPDM, epichlorohydrin rubber, neoprene rubber, polysulfide, butyl rubber, etc.); metals (iron, aluminum, stainless steel, titanium, copper, brass, and alloys thereof, etc.); natural fibers such as cellulose, cellulose derivatives, cellulose analogs (chitin, chitosan, porphyran, etc.), cotton, silk and wool; regenerated fibers such as rayon; semi-synthetic fibers such as acetate; synthetic fibers such as vinylon, polyester, nylon, polyethylene, polypropylene, polyurethane and polyaramid fibers; and composite fibers of these fibers (e.g., polyester/cotton). These materials may be in the form of, for example, a substrate, sheet, film, fibers, and various types of articles made therefrom.

By employing a known method of application, it is possible to form a film of the inventive composition on the surface of a base material and render it into a hydrophilic coat.

Methods of application that may be used include bar coating, dip coating, spin coating, spray coating, float coating, brush coating, gravure coating, roll transfer coating, blade coating, air knife coating, slit coating, screen coating, inkjet coating and flexography. Of these, bar coating is preferred.

Following application of the composition onto a base material, a cured film can be obtained by heating.

The heating temperature is preferably between 40°C and 250°C, and more preferably between 80°C and 120°C. The drying time is preferably from 10 seconds to 12 hours, and more preferably from 30 seconds to 3 hours.

Solvent within the composition may be removed by carrying out pre-drying under the same conditions as above.

The heating atmosphere may be either an open-air atmosphere or an inert gas (e.g., nitrogen, argon or the like) atmosphere.

The thickness of the applied film of the invention (dry film thickness) is not particularly limited, but is preferably from 0.1 to 50 µm, and more preferably from 1 to 10 µm.

### EXAMPLES

Examples and Comparative Examples are given below by way of illustration, although the invention is not limited by these Examples.

### <1. Preparation of Hydrophilic Copolymer>

### [Example 1-1]

A 7.50 g amount of a methyl ethyl ketone solution (solids concentration, 36 wt%) of Acrit 1WX (Taisei Fine Chemical Co., Ltd.), which is a copolymer containing constitutional units of formulas (12), (13), (14), (15) and (16) below, 0.51 g of 3-isocyanatopropyltriethoxysilane and 0.02 g of the dioctyltin catalyst Neostann U-830 (Nitto Kasei Co., Ltd.) were added to a reactor and reacted for 24 hours at 25°C.

Following the reaction, 7 g of a methyl ethyl ketone solution (solids concentration, 41 wt%) of Hydrophilic Copolymer P1 (constitutional unit (a) content, 25 wt%; constitutional unit (b) content, 30 wt%; weight-average molecular weight, 19,000) was obtained by filtration. 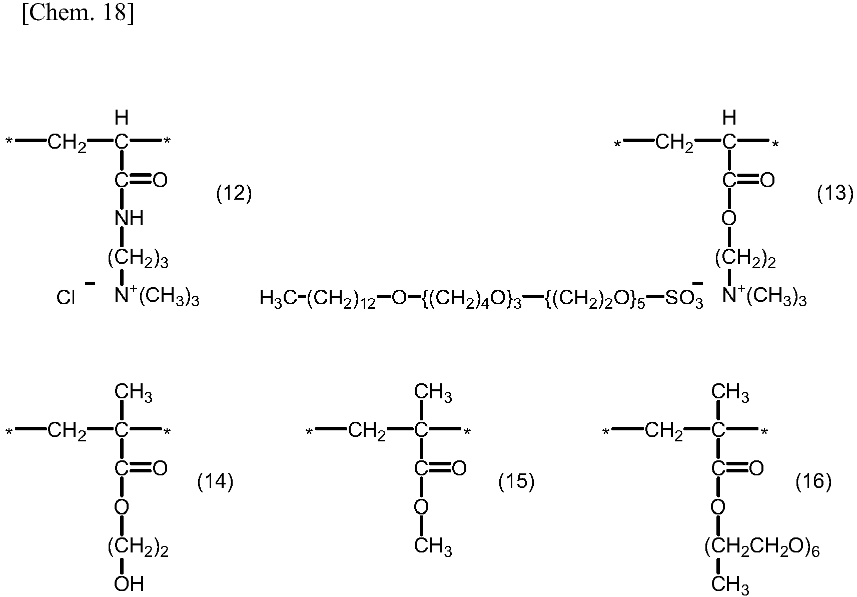 In these formulas, an asterisk * has the same meaning as above.

### [Example 1-2]

A 7.50 g amount of a methyl ethyl ketone solution (solids concentration, 36 wt%) of Acrit 1WX (Taisei Fine Chemical Co., Ltd.), which is a copolymer containing constitutional units of above formulas (12), (13), (14), (15) and (16), 0.25 g of 3-isocyanatopropyltriethoxysilane, 0.19 g of Duranate^{®} TPA-100 (NCO content, 23 wt%, from Asahi Kasei Corporation) and 0.02 g of the dioctyltin catalyst Neostann U-830 (Nitto Kasei Co., Ltd.) were added to a reactor and reacted for 24 hours at 25°C.

Following the reaction, 7 g of a methyl ethyl ketone solution (solids concentration, 42 wt%) of Hydrophilic Copolymer P2 (constitutional unit (a) content, 25 wt%; constitutional unit (b) content, 15 wt%; weight-average molecular weight, 20,000) was obtained by filtration.

### [Comparative Example 1-1]

A 7.50 g amount of a methyl ethyl ketone-diluted product (solids concentration, 36 wt%) of Acrit 1WX (Taisei Fine Chemical Co., Ltd.), which is a copolymer containing constitutional units of above formulas (12), (13), (14), (15) and (16), 0.3743 g of Duranate^{®} TPA-100 (NCO content, 23 wt%, from Asahi Kasei Corporation) and 0.02 g of the dioctyltin catalyst Neostann U-830 (Nitto Kasei Co., Ltd.) were added to a reactor and reacted for 24 hours at 25°C.

Following the reaction, 7 g of a methyl ethyl ketone solution (solids concentration, 44 wt%) of Hydrophilic Copolymer P3 (constitutional unit (a) content, 30 wt%; constitutional unit (b) content, 0 wt%; weight-average molecular weight, 18,000) was obtained by filtration.

### [Synthesis Example 1-1]

A 92.0 g amount of ethanol and 108 g of MKC^{®} Silicate MS51 (Mitsubishi Chemical Corporation), which is a partially hydrolyzed oligomer of tetramethoxysilane, were added to a reactor, following which 200 g of deionized water was gradually added. Lastly, 12 g of acetic acid was added and the system was stirred for 24 hours at 25°C, giving a siloxane hydrolyzate-containing mixture.

¹H-NMR measurement confirmed that, in the resulting mixture, the partially hydrolyzed oligomer of tetramethoxysilane was completely hydrolyzed.

### <2. Preparation of Coating Composition>

### [Example 2-1]

A 1.04 g amount of the methyl ethyl ketone solution of Hydrophilic Copolymer P1 obtained in Example 1-1, 2.74 g of methanol and 0.38 g of a methanol diluted product (0.6 wt% dilution) of the dioctyltin catalyst Neostann U-830 (Nitto Kasei Co. Ltd.) were added to a reactor and reacted for 1 hour at 25°C, giving a clear yellow liquid (C1).

### [Example 2-2]

A 1.04 g amount of the methyl ethyl ketone solution of Hydrophilic Copolymer P1 obtained in Example 1-1, 2.74 g of methanol, 0.38 g of a methanol diluted product (0.6 wt% dilution) of the dioctyltin catalyst Neostann U-830 (Nitto Kasei Co. Ltd.) and 1.62 g of the siloxane hydrolyzate obtained in Synthesis Example 1-1 were added to a reactor and reacted for 1 hour at 25°C, giving a clear yellow liquid (C2).

### [Example 2-3]

A 0.94 g amount of the methyl ethyl ketone solution of Hydrophilic Copolymer P1 obtained in Example 1-1, 2.74 g of methanol, 0.38 g of a methanol diluted product (0.6 wt% dilution) of the dioctyltin catalyst Neostann U-830 (Nitto Kasei Co. Ltd.) and 0.10 g of a methanol solution (solids concentration, 44 wt%) of tris(trimethoxysilylpropyl)isocyanurate were added to a reactor and reacted for 1 hour at 25°C, giving a clear yellow liquid (C3).

### [Example 2-4]

A 1.01 g amount of the methyl ethyl ketone solution of Hydrophilic Copolymer P2 obtained in Example 1-2, 2.77 g of methanol and 0.38 g of a methanol diluted product (0.6 wt% dilution) of the dioctyltin catalyst Neostann U-830 (Nitto Kasei Co. Ltd.) were added to a reactor and reacted for 1 hour at 25°C, giving a transparent yellow liquid (C4).

### [Example 2-5]

A 1.01 g amount of the methyl ethyl ketone solution of Hydrophilic Copolymer P2 obtained in Example 1-2, 2.77 g of methanol, 0.019 g of the hydrophilic silane of above formula (11) and 0.38 g of a methanol diluted product (0.6 wt% dilution) of the dioctyltin catalyst Neostann U-830 (Nitto Kasei Co. Ltd.) were added to a reactor and reacted for 1 hour at 25°C, giving a clear yellow liquid (C5).

### [Comparative Example 2-1]

A 0.98 g amount of the methyl ethyl ketone solution of Hydrophilic Copolymer P3 obtained in Comparative Example 1-1, 2.80 g of methanol, 0.019 g of the hydrophilic silane of above formula (11) and 0.38 g of a methanol diluted product (0.6 wt% dilution) of the dioctyltin catalyst Neostann U-830 (Nitto Kasei Co. Ltd.) were added to a reactor and reacted for 1 hour at 25°C, giving a clear yellow liquid (C6).

### [Comparative Example 2-2]

Ten grams of the hydroxyl group-containing acrylic resin Acrit 6BF-100 (solids concentration, 40 wt%; from Taisei Fine Chemical Co., Ltd.) having a weight-average molecular weight of 75,000, a hydroxyl value of 20 mgKOH/g and a calculated glass transition temperature of 85°C, 0.65 g of Duranate^{®} TPA-100 (NCO content, 23 wt%; from Asahi Kasei Corporation), 1.0 g of a methyl ethyl ketone solution (solids concentration, 40 wt%) of Acrit 1WX (Taisei Fine Chemical Co., Ltd.), which is a copolymer containing constitutional units of above formulas (12), (13), (14), (15) and (16), and 13.6 g of methyl ethyl ketone were mixed together in a reactor, giving a clear yellow liquid (C7).

### <3. Production and Evaluation of Film>

### [Examples 3-1 to 3-5 and Comparative Examples 3-1 and 3-2]

Coating compositions C1 to C7 obtained in Examples 2-1 to 2-5, Comparative Example 2-1 and Comparative Example 2-2 were each applied with a bar coater (No. 14) onto a glass plate and immediately dried at 120°C for 1 hour, giving a hydrophilic film. The following tests were carried out on the resulting films. The results are shown in Table 2.

### <Evaluation of Fog Resistance>

The fog resistance of each film was rated as "×" in cases where the film surface fogged up when exhaled on and as "○" in cases where the film surface did not fog up. The fog resistance was rated as "⊚" in cases where the film surface did not fog up when placed above a 60°C warm water bath at a height of 3 cm from the water's surface.

### <Evaluation of Water Resistance>

Each of the above films was immersed in tap water for 5 minutes at 25°C, after which water on the surface was wiped off with a paper wipe. The film was then air dried for 10 minutes at 25°C and the above-described fog resistance evaluation was carried out.

Next, each film was additionally immersed in tap water for one hour, after which water on the surface was wiped off with a paper wipe. The film was then air dried for 10 minutes at 25°C and the above-described fog resistance evaluation was carried out.

### <Evaluation of Moisture Resistance>

Each of the above films was left at rest for 24 hours in a thermohygrostat (KCL-2000W, Tokyo Rikakikai Co., Ltd.) set to 50°C and 98% RH. The film was then air dried for 10 minutes at 25°C, and the above-described fog resistance evaluation was carried out.

**[Table 2]**

| | Coating composition | Fog resistance | Water resistance | | Moisture resistance |
|---|---|---|---|---|---|
| | | | After 5-minute immersion in water | After 1-hour immersion in water | 50°C/98%RH/24 hrs |
| Example 3-1 | C1 | ⊚ | ⊚ | ○ | ○ |
| Example 3-2 | C2 | ⊚ | ⊚ | ○ | ⊚ |
| Example 3-3 | C3 | ⊚ | ⊚ | ○ | ⊚ |
| Example 3-4 | C4 | ⊚ | ⊚ | ○ | ⊚ |
| Example 3-5 | C5 | ⊚ | ⊚ | ⊚ | ⊚ |
| Comparative Example 3-1 | C6 | × | × | × | × |
| Comparative Example 3-2 | C7 | ⊚ | ⊚ | × | ○ |

As shown in Table 2, the films obtained in Examples 3-1 to 3-5 retained excellent hydrophilicity and fog resistance even after the water resistance tests (5-minute immersion in water, 1-hour immersion in water) and after the moisture resistance test (24 hours at 50°C and 98% RH). The results obtained for the film in Example 3-5 indicated a particularly outstanding durability.

The films in Comparative Examples 3-1 and 3-2 lost their water resistance following one hour of immersion in water, resulting in a poor water resistance.

## Claims

1. A hydrophilic copolymer comprising constitutional units (a) of formula (1) below and constitutional units (b) of formula (2) below, wherein the content of constitutional units (a) is from 5 to 60 wt% and the combined content of constitutional units (a) and constitutional units (b) is 30 wt% or more 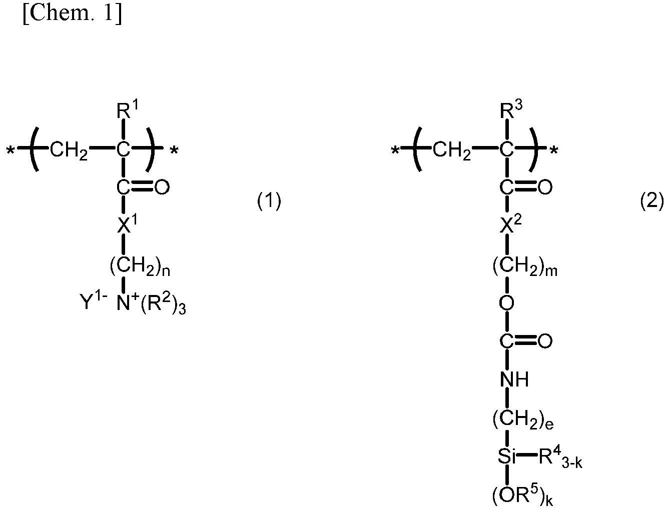 wherein, in formula (1), R¹ is a hydrogen atom or a methyl group, each R² is independently a substituted or unsubstituted alkyl group of 1 to 6 carbon atoms or aryl group of 6 to 18 carbon atoms, X¹ is -NH- or -O-, n is an integer from 1 to 6, and Y¹⁻ is any anion;
in formula (2), R³ is a hydrogen atom or a methyl group, R⁴ and R⁵ are each independently an alkyl group of 1 to 10 carbon atoms or an aryl group of 6 to 10 carbon atoms, X² is -NH- or -O-, m is an integer from 1 to 10, e is an integer from 1 to 10, and k is an integer from 1 to 3; and
an asterisk * denotes a bond to a neighboring constitutional unit.

2. The hydrophilic copolymer according to claim 1, further comprising constitutional units of formula (6) below 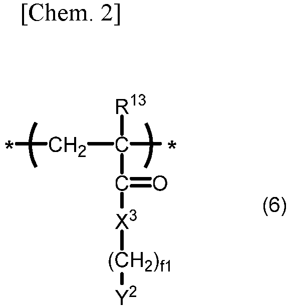 wherein R¹³ is a hydrogen atom or a methyl group; X³ is -NH- or -O-, Y² is a group selected from the group consisting of a hydrogen atom and hydroxyl, carboxyl, amino, isocyanate, epoxy, alkoxy and hydrolyzable silyl groups; f1 is an integer from 0 to 10, with the proviso that when f1 is 0, Y² is a hydrogen atom; and an asterisk * has the same meaning as above.

3. The hydrophilic copolymer according to claim 1 or 2, further comprising constitutional units of formula (7) below 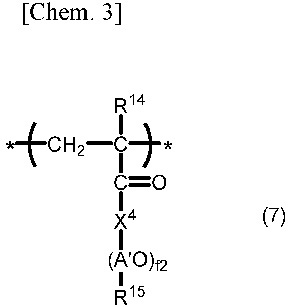 wherein R¹⁴ is a hydrogen atom or a methyl group, X⁴ is -NH- or -O-, A' is an alkylene group of 1 to 6 carbon atoms, R¹⁵ is an alkyl group of 1 to 6 carbon atoms, f2 is an integer from 1 to 10, and an asterisk * has the same meaning as above.

4. A hydrophilic composition comprising the hydrophilic copolymer according to any one of claims 1 to 3.

5. The hydrophilic composition according to claim 4, further comprising at least one compound selected from the group consisting of polyisocyanate compounds, organosilicon compounds of formula (3) below and organosilicon compounds of formula (4) below 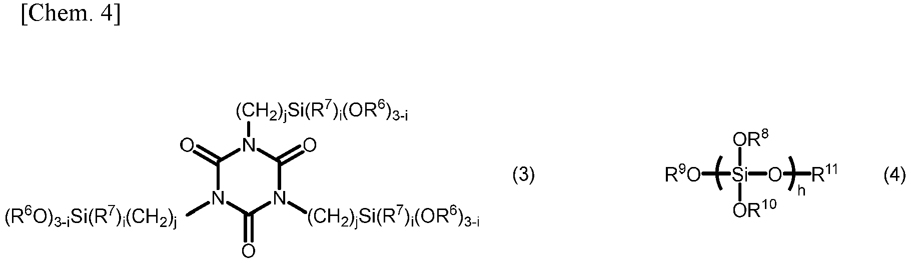 wherein, in formula (3), R⁶ and R⁷ are each independently an alkyl group of 1 to 10 carbon atoms or an aryl group of 6 to 10 carbon atoms, j is an integer from 1 to 10, and i is an integer from 1 to 3; and
in formula (4), R⁸, R⁹, R¹⁰ and R¹¹ are each independently a hydrogen atom or an organic group of 1 to 6 carbon atoms, and h is an integer from 1 to 20.

6. A coating agent comprising the hydrophilic composition according to claim 4 or 5.

7. A hydrophilic film of the coating agent according to claim 6 in the cured state.

## Patentansprüche

1. Hydrophiles Copolymer, das aus Strukturelementen (a) der nachstehenden Formel (1) und Struktureinheiten (b) der nachstehenden Formel (2) besteht, wobei der Gehalt der Struktureinheiten (a) 5 bis 60 Gew.-% und der gemeinsame Gehalt der Struktureinheiten (a) und der Struktureinheiten (b) 30 Gew.-% oder mehr beträgt: 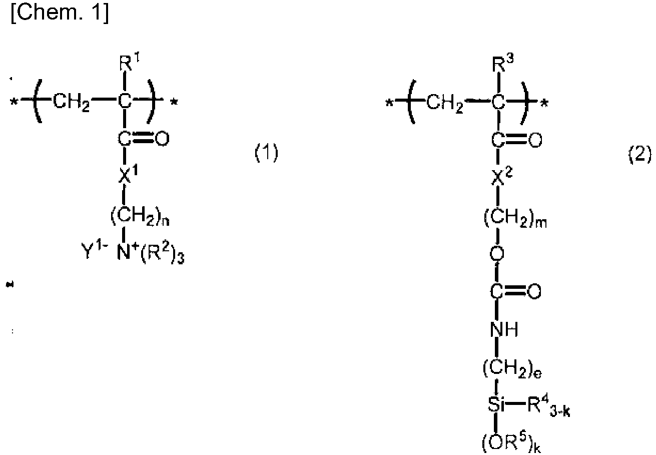 wobei in Formel (1) R¹ ein Wasserstoffatom oder eine Methylgruppe ist, die R² jeweils unabhängig eine substituierte oder unsubstituierte Alkylgruppe mit 1 bis 6 Kohlenstoffatomen oder eine Arylgruppe mit 6 bis 18 Kohlenstoffatomen sind, X¹ -NH- oder -O- ist, n eine ganze Zahl von 1 bis 6 ist und Y¹⁻ ein beliebiges Anion ist;
in Formel (2) R³ ein Wasserstoffatom oder eine Methylgruppe ist, R⁴ und R⁵ jeweils unabhängig voneinander eine Alkylgruppe mit 1 bis 10 Kohlenstoffatomen oder eine Arylgruppe mit 6 bis 10 Kohlenstoffatomen sind, X² -NH- oder -O- ist, m eine ganze Zahl von 1 bis 10 ist, e eine ganze Zahl von 1 bis 10 ist und k eine ganze Zahl von 1 bis 3 ist; und
der Stern * eine Bindung zu einer benachbarten Struktureinheit anzeigt.

2. Hydrophiles Copolymer nach Anspruch 1, das weiters Struktureinheiten der nachstehenden Formel (6) umfasst: 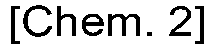 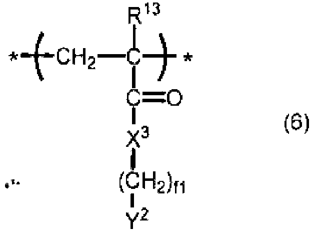 worin R¹³ ein Wasserstoffatom oder eine Methylgruppe ist; X³ -NH- oder -O- ist, Y² eine Gruppe ist, die aus der aus einem Wasserstoffatom und Hydroxyl, Carboxyl, Amino, Isocyanat, Epoxy, Alkoxy und hydrolysierbaren Gruppen bestehenden Gruppe ausgewählt ist; f1 eine ganze Zahl von 0 bis 10 ist, mit der Maßgabe, dass, wenn f1 0 ist, Y² ein Wasserstoffatom ist; und der Stern * die gleiche Bedeutung wie oben hat.

3. Hydrophiles Copolymer nach Anspruch 1 oder 2, das weiters Struktureinheiten der nachstehenden Formel (7) umfasst: 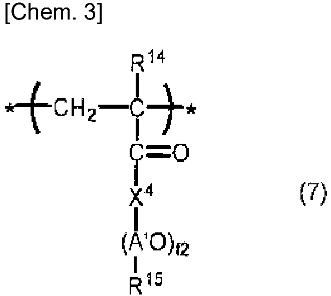 worin R¹⁴ ein Wasserstoffatom oder eine Methylgruppe ist, X⁴ -NH- oder -O- ist, A' eine Alkylengruppe mit 1 bis 6 Kohlenstoffatomen ist, R¹⁵ eine Alkylgruppe mit 1 bis 6 Kohlenstoffatomen ist, f2 eine ganze Zahl von 1 bis 10 ist und der Stern * die gleiche Bedeutung wie oben hat.

4. Hydrophile Zusammensetzung, die ein hydrophiles Copolymer nach einem der Ansprüche 1 bis 3 umfasst.

5. Hydrophile Zusammensetzung nach Anspruch 4, die weiters zumindest eine Verbindung umfasst, die aus der aus Polyisocyanat-Verbindungen, Organosilicium-Verbindungen der nachstehenden Formel (3) und Organosilicium-Verbindungen der nachstehenden Formel (4) bestehenden Gruppe ausgewählt sind: 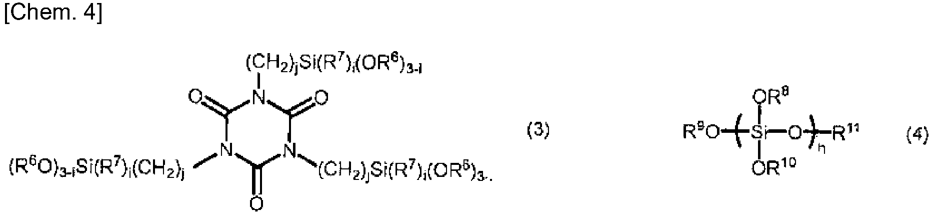 wobei in Formel (3) R⁶ und R⁷ jeweils unabhängig voneinander eine Alkylgruppe mit 1 bis 10 Kohlenstoffatomen oder eine Arylgruppe mit 6 bis 10 Kohlenstoffatomen sind, j eine ganze Zahl von 1 bis 10 ist und i eine ganze Zahl von 1 bis 3 ist; und
in Formel (4) R⁸, R⁹, R¹⁰ und R¹¹ jeweils unabhängig voneinander ein Wasserstoffatom oder eine organische Gruppe mit 1 bis 6 Kohlenstoffatomen sind und h eine ganze Zahl von 1 bis 20 ist.

6. Beschichtungsmittel, das eine hydrophile Zusammensetzung nach Anspruch 4 oder 5 umfasst.

7. Hydrophiler Film aus einem Beschichtungsmittel nach Anspruch 6 im gehärteten Zustand.

## Revendications

1. Copolymère hydrophile comprenant des motifs constitutifs (a) de formule (1) ci-dessous et des motifs constitutifs (b) de formule (2) ci-dessous, dans lequel la teneur en motifs constitutifs (a) est de 5 à 60 % en poids et la teneur combinée en motifs constitutifs (a) et en motifs constitutifs (b) est de 30 % en poids ou plus 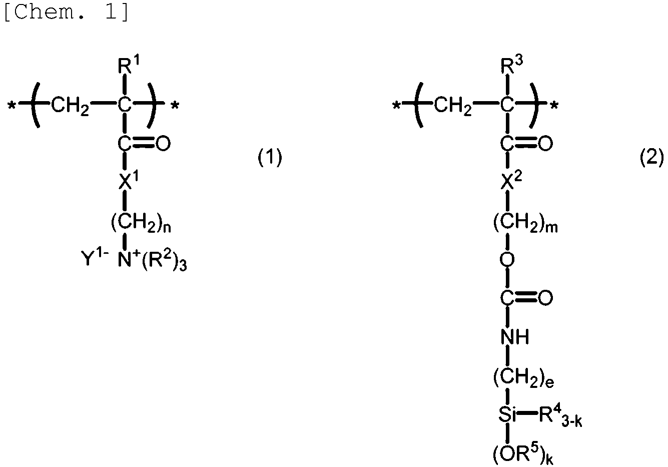 dans lequel, dans la formule (1), R¹ est un atome d'hydrogène ou un groupe méthyle, chaque R² est indépendamment un groupe alkyle substitué ou non substitué de 1 à 6 atomes de carbone ou un groupe aryle de 6 à 18 atomes de carbone, X¹ est -NH- ou -O-, n est un nombre entier de 1 à 6, et Y¹⁻ est un anion quelconque ;
dans la formule (2), R³ est un atome d'hydrogène ou un groupe méthyle, R⁴ et R⁵ sont chacun indépendamment un groupe alkyle de 1 à 10 atomes de carbone ou un groupe aryle de 6 à 10 atomes de carbone, X² est -NH- ou -O-, m est un entier de 1 à 10, e est un entier de 1 à 10, et k est un entier de 1 à 3 ; et
un astérisque * désigne une liaison à un motif constitutif voisin.

2. Copolymère hydrophile selon la revendication 1, comprenant en outre des motifs constitutifs de formule (6) ci-dessous 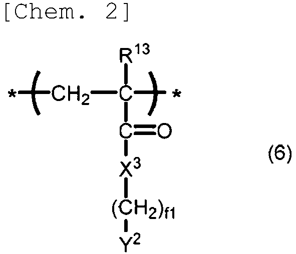 dans lequel R¹³ est un atome d'hydrogène ou un groupe méthyle ; X³ est -NH- ou -O-, Y² est un groupe choisi dans le groupe constitué d'un atome d'hydrogène et de groupes hydroxyle, carboxyle, amino, isocyanate, époxy, alcoxy et silyle hydrolysable ; f1 est un entier de 0 à 10, à condition que lorsque f1 est 0, Y² soit un atome d'hydrogène ; et un astérisque * présente la même signification que ci-dessus.

3. Copolymère hydrophile selon la revendication 1 ou 2, comprenant en outre des motifs constitutionnels de formule (7) ci-dessous 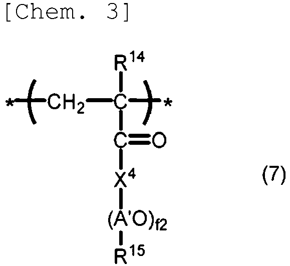 dans lequel R¹⁴ est un atome d'hydrogène ou un groupe méthyle, X⁴ est -NH- ou -O-, A' est un groupe alkylène de 1 à 6 atomes de carbone, R¹⁵ est un groupe alkyle de 1 à 6 atomes de carbone, f2 est un nombre entier de 1 à 10, et un astérisque * présente la même signification que ci-dessus.

4. Composition hydrophile comprenant le copolymère hydrophile selon l'une quelconque des revendications 1 à 3.

5. Composition hydrophile selon la revendication 4, comprenant en outre au moins un composé choisi dans le groupe constitué de composés de polyisocyanate, de composés d'organosilicium de formule (3) ci-dessous et de composés d'organosilicium de formule (4) ci-dessous 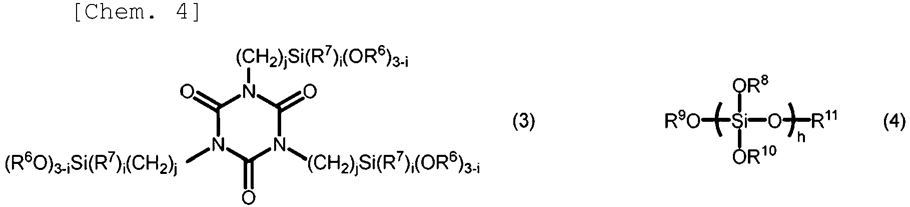 dans laquelle, dans la formule (3), R⁶ et R⁷ sont chacun indépendamment un groupe alkyle de 1 à 10 atomes de carbone ou un groupe aryle de 6 à 10 atomes de carbone, j est un entier de 1 à 10, et i est un entier de 1 à 3 ; et
dans la formule (4), R⁸, R⁹, R¹⁰ et R¹¹ sont chacun indépendamment un atome d'hydrogène ou un groupe organique de 1 à 6 atomes de carbone, et h est un nombre entier de 1 à 20.

6. Agent de revêtement comprenant la composition hydrophile selon la revendication 4 ou 5.

7. Film hydrophile de l'agent de revêtement selon la revendication 6 à l'état durci.
